# EUROPEAN PATENT APPLICATION

(11) **EP 2 650 497 A1**
(43) Date of publication of application: **16.10.2013**
(21) Application number: 12305424.9
(22) Date of filing: 11.04.2012
(51) Int. Cl.: F01N 3/20

(54) **A system for storing an additive solution for a vehicle engine**

(71) Applicant: TI Automotive Fuel Systems SAS, 51000 Châlons-en-Champagne (FR)
(72) Inventor: Fromont, Jean-Sébastien, 51520 SARRY (FR); Renaut, Stéphane, 51140 JONCHERY SUR VESLE (FR); Bouvet, Romain, 51600 SAINT HILAIRE LE GRAND (FR)
(74) Representative: Regimbeau

(57) **Abstract**

A system for storing an additive solution for a vehicle engine, said system comprising a tank (100) for storing said additive solution, a pumping module for pumping said additive solution in the tank (100) and an electrical heating device (300) for heating the additive solution inside the tank (100) when freezing conditions are detected, said electrical heating device (300) being associated with electrical connecting lines for electrical supply of the heating device (300), wherein the heating device (300) comprises at least an heating module provided in a blind pocket (170) integral with the lower wall (112) of the tank, said pocket (170) opening outside the tank (100) and projecting inside the internal volume of the tank (100) from the lower wall (112) and said electrical connecting lines for electrical supplying of the heating device (300) being fully provided on the outside of the tank (100).

## Description

### +FIELD OF THE INVENTION

The invention relates to an additive tank system for a waste gas cleaning catalyst of a vehicle internal combustion engine.

### BACKGROUND OF THE INVENTION

New legislations which target the reduction of pollutant emissions from motor vehicles lead to systems for eliminating nitrogen oxides NOₓ from exhaust gases of vehicles.

One of the technologies developed, known as SCR for "Selective Catalytic Reduction", consists in injecting into the fuel tank or inside the exhaust line, a solution containing a precursor of ammonia (generally urea) which chemically reduces the NOₓ to nitrogen. The SCR technology relates particularly to diesel engines.

The vehicles are therefore provided with an additive tank and means for pumping an injecting the precursor when needed.

However the aqueous urea solution generally used for this purposes, made by a water/urea eutectic containing 32,5 wt% of urea, freezes about-11°C.

Consequently it is necessary to provide a heating device to liquefy the solution of precursor in order to be able to inject it, in the event of starting in freezing conditions.

Many embodiments of such heating device have been still proposed. Some examples of known heating devices are disclosed in US 2009/0100824, US 2008/0290184, DE 10 2007 024 782, FR 2 916 188, FR 2 918 968, FR 2 954 404, FR 2 905 161, WO 2006/064001 and EP 1 925 354.

All these known heating devices comprise heating inserts designed to be immersed in the urea solution to be heated.

More precisely the known embodiments proposed according to the state of the art comprise an additive tank which houses both a pump for pumping the urea and an heating insert immersed in the urea for heating the urea when needed.

However urea solutions used as an additive for SCR technology for Nox reduction is corrosive, electrically conductive and has the ability to migrate through electrical wires.

Consequently the systems in accordance with the state of the art lead to high constraints in the choice of metallic materials and generally require stainless steel which is the only metal recognized as compatible with urea solution. They also require complex tightness interfaces for wires and sensors between inside and outside tank. Moreover such systems of the prior art include complex protective means such as plastic sheath overmolded upon the heating device and the electrical connecting lines supplying the heating device so as to protect them against the corrosive effect of urea solution.

Such solutions are costly and not fully reliable.

### SUMMARY OF THE INVENTION

The present invention aims to solve the above problem by providing a simple system than that proposed according to the state of the art.

For this purpose, the present invention relates to a system for storing an additive solution for a vehicle engine, said system comprising a tank for storing said additive solution, a pumping module for pumping said additive solution in the tank and an electrical heating device for heating the additive solution inside the tank when freezing conditions are detected, said electrical heating device being associated with electrical connecting lines for electrical supply of the heating device, wherein the heating device comprises at least an heating module provided in a blind pocket integral with the lower wall of the tank, said pocket opening outside the tank and projecting inside the internal volume of the tank from the lower wall and said electrical connecting lines for electrical supplying of the heating device being fully provided on the outside of the tank.

According to advantageous embodiments :
- the device comprises a plurality of heating modules;
- heating modules includes PTC heaters;
- the device comprises a reserve pot, the pumping module is provided inside the reserve pot and the heating modules cover the wall of the reserve pot.

### BRIEF DESCRIPTION OF THE DRAWINGS

Additional and other objects, features and advantages of the invention will become apparent from the description set forth hereinafter when considered in conjunction with the accompanying drawings, in which :

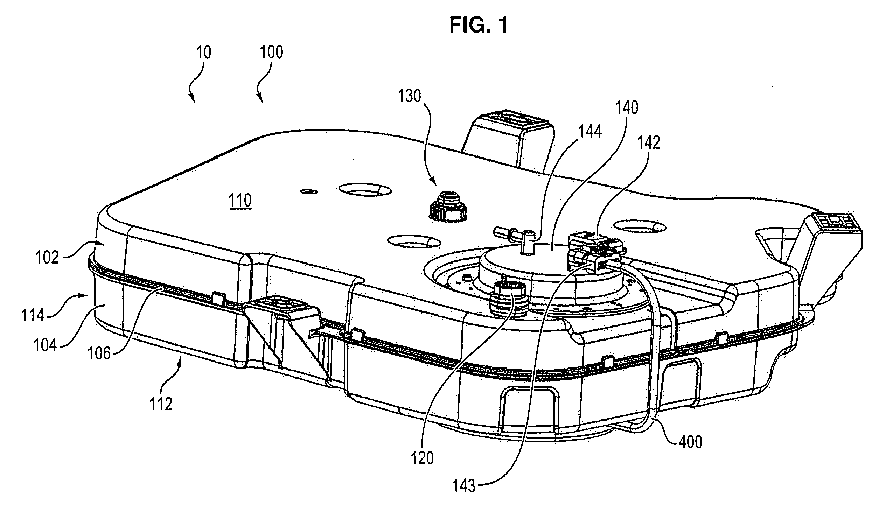

FIG 1 is an external view of an additive tank in accordance with the present invention;

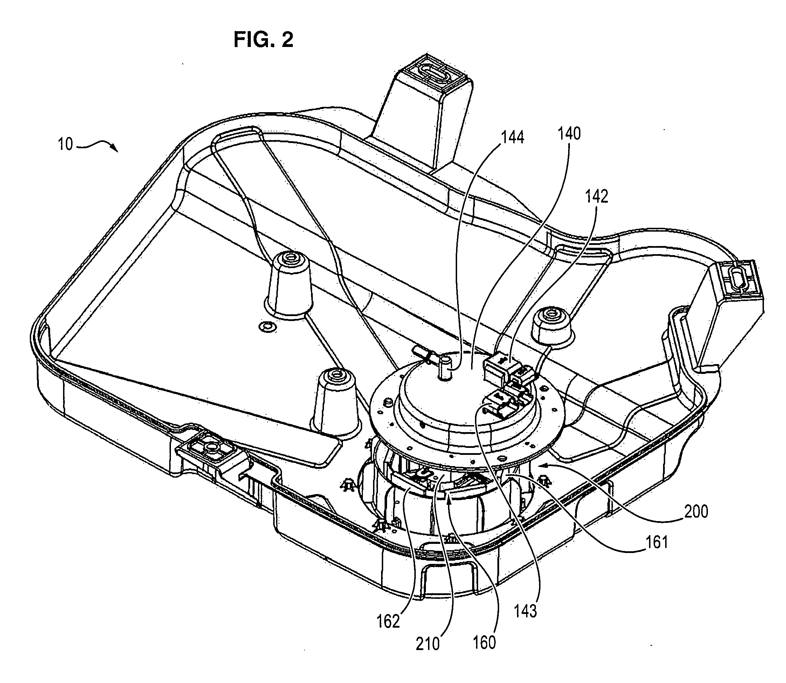

FIG 2 is a schematic partial view of the same tank without the upper part of the tank;
FIG 3 is a partial sectional view of the bottom part of the tank;
FIG 4 and 5 are schematic views of heating modules in accordance with the present invention before insertion in the corresponding pockets of the tank;
FIG 6 is a external view of the lower wall of the tank in accordance with the present invention;

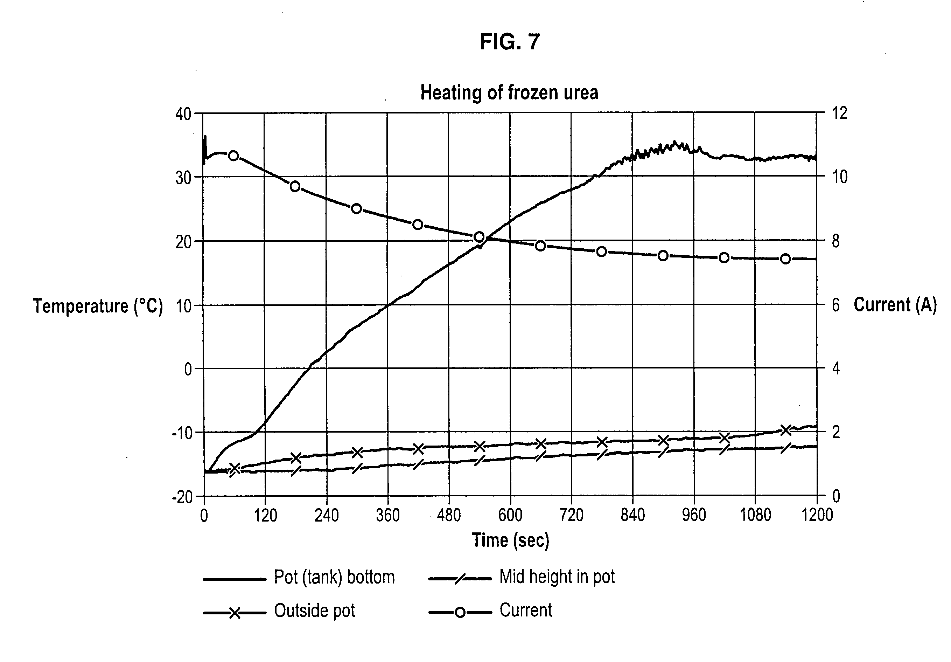

FIG 7 is a graph illustrating the current applied to the heating device and the evolution of temperature respectively at the bottom of a pot in the tank, in the mid height of the pot and outside the pot
FIG 8 is an external bottom view of an additive tank in accordance with an alternative embodiment of the present invention;
FIG 9 is a partial sectional view of the bottom part of the tank in accordance with the alternative embodiment of the present invention;
FIG 10 is a partial vertical sectional view of the same bottom part of the tank and
FIG 11 is another partial sectional view of the same bottom part of the tank in accordance with the alternative embodiment of the present invention.

### DETAILED DESCRIPTION OF A PREFERRED EMBODIMENT OF THE INVENTION

The tank system 10 in accordance with the present invention which is illustrated in the enclosed figures comprises:
- an additive tank 100,
- a module 200 for pumping the additive,
- an heating device 300, and
- electrical connecting lines 400 for supplying the heating device 300.

The tank 100 can be made from a great number of technologies. Preferentially the tank 100 is made from two halves injection molded shells, an upper one 102 and a lower one 104, welded together on their connecting adjacent part 106.

Said tank 100 after welding of the two shells 102 and 104 comprises an upper wall 110, a lower wall 112 and a lateral wall 114 connecting the upper wall 110 and the lower wall 112. In use the upper and the lower walls 110 and 112 are horizontal while the lateral wall 114 is vertical.

The upper wall 110 is provided with a filling interface with a screw cap 120, a venting module 130 and a flange 140 which supports the module 200 for pumping the additive.

Such filling interface 120 and venting module 130 are well known and will not be described more in detail.

The flange 140 is preferentially in the center of the upper wall 110. The module 200 for pumping the additive is located inside the tank 100 and is hanged from the lower surface of the flange 140.

The module 200 for pumping the additive comprises any possible kind of pumping means 210 compatible with urea.

The pumping means 210 may be formed by an electrical rotating pump. However preferentially pumping means 210 is a solenoid dosing pump. Such a solenoid dosing pump comprises generally a piston which is moved sequentially by a magnetic force issued by the solenoid so as to alternatively suck additive in a pumping chamber and expel the additive outside said pumping chamber.

The flange 140 is provided both with electrical connecting means 142 for electrically supplying the pumping means 210 and hydraulic connecting means 144 in connection with the output of the pumping means.

More precisely the solenoid dosing pump 210 is located inside a reserve pot 160 integral with the lower wall 112 of the tank.

Thus the dosing pump 210 is vertically integrated in the tank. The coil or solenoid of the pump 210 is used as an additional heating device for cavitation prevention.

According to the specific embodiment illustrated on the enclosed figures, the pot 160 is made by a general cylindrical wall 161 so that the horizontal cross section of the pot 160 is about circular. The inside volume of the pot 160 is in communication with the volume of the tank 100 outside the pot 160 by any controlling means suitable for allowing free filling up of the pot 160 from the tank (ie free transfer of additive from the tank 100 towards inside the pot 160), while limiting draining of the pot 160 (ie limiting transfer of additive form inside the pot 160 towards the tank 100). For example such controlling means may be a cylindrical labyrinth 162 integral with the wall 161 and in connection on a one side with the inside volume of the pot 160 and in connection on the other side with the volume of the tank outside said pot 160.

The flange 140 also integrates an electronic dosing module suitable for controlling the operation of the solenoid dosing pump 210.

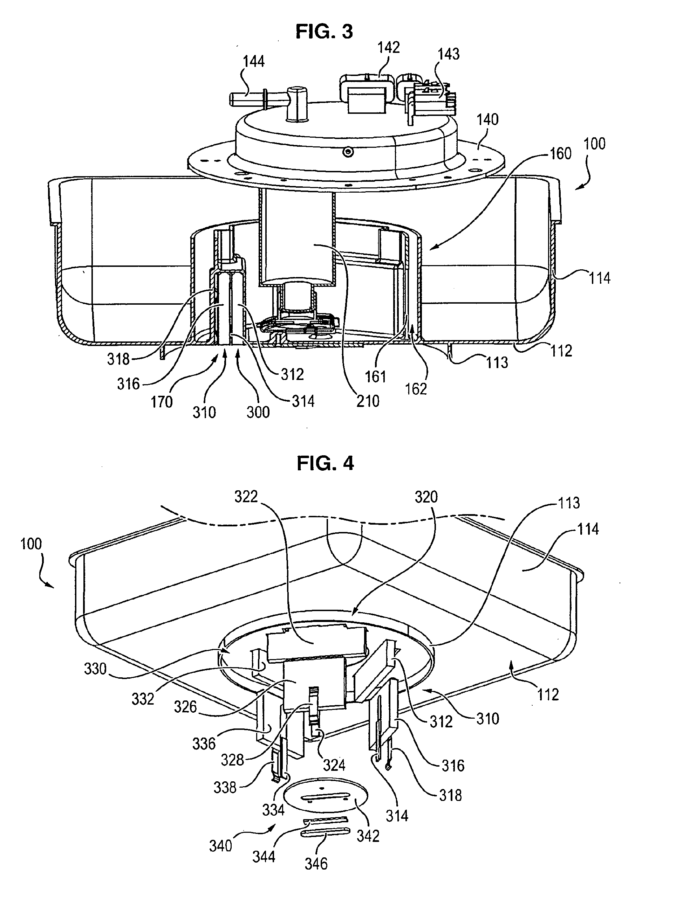

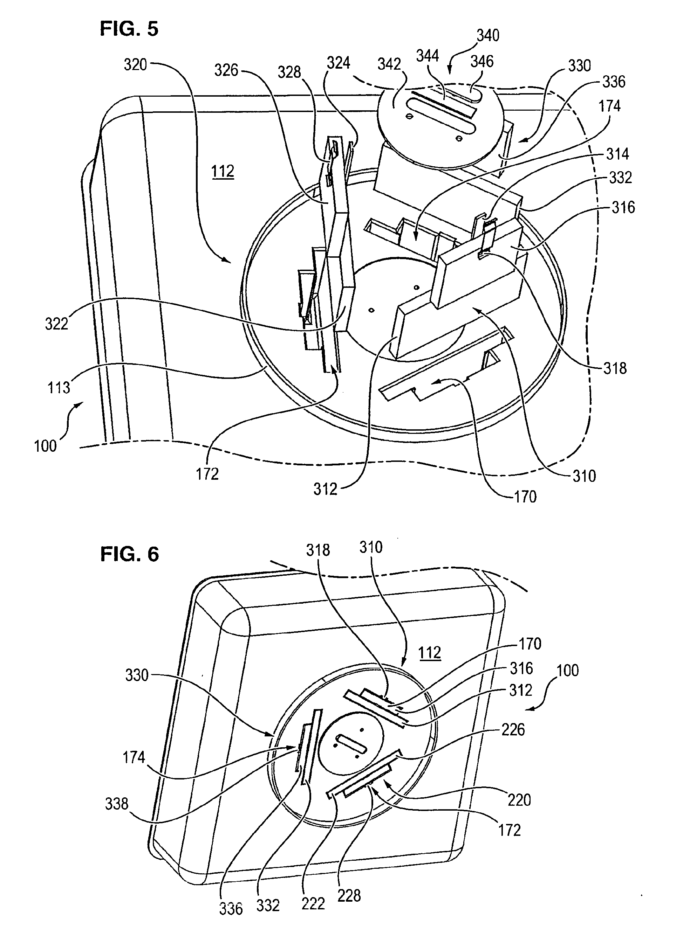

The first embodiment illustrated on figures 3 to 6 will be first described.

As indicated above, according to the present invention, the heating device 300 comprises at least an heating module 310 provided in a blind pocket 170 integral with the lower wall 112 of the tank 100. Said pocket 170 projects inside the internal volume of the tank 100 from the lower wall of the tank as illustrated on figure 3 and opens outside the tank on the bottom side of the tank.

Said heating device 300 being placed inside blind pockets which do not open inside the tank 300, they are fully insulated from urea and consequently there is no risk of corrosion of said heating device 300 by the urea without needing any specific anti-corrosion sheathing.

In accordance with the present invention, preferentially the heating device 300 comprises a plurality of heating modules 310, 320, 330 and 340 dispatched on the lower wall 112 of the tank so as to generally cover the wall 161 of the pot 160.

According to the specific embodiment illustrated on the enclosed figures, the heating device 300 comprises a plurality of heating modules (310, 320, 330) regularly angularly dispatched around the lateral wall 161 of the pot 160 and an additional heating module 340 provided on the outside surface of the bottom wall of the pot 160.

More precisely according to the specific embodiment illustrated on the enclosed figures 3 to 6, the heating device 300 comprises 3 heating modules 310, 320, 330 angularly dispatched around the wall 161 of the pot 160 and an additional heating module 340 provided on the outside surface of the bottom wall of the pot 160.

In accordance with the present invention the heating modules 310, 320 and 330 are provided in respective blind pockets 170, 172, 174 integral with the wall 161 of the pot 160 (see figure 3). Said pockets 170, 172, 174 project inside the tank 100 from the bottom wall 112. Each pocket defines a generally parallelepiped internal chamber receiving an heating module 310, 320 or 330.

Said heating modules 310, 320, 330 and 340 preferentially comprise PTC heaters 314, 324, 334 and 344.

PTC heating means are well known. PTC heating elements are made from ceramic, such as ceramic based on barium titanate. When a voltage is placed across a PTC, current will flow and begin to heat the PTC. Initially, the resistance drops, allowing more current to flow and thus begins to heat more quickly. PTC heaters are effective low cost solutions providing highly efficient source of heat in a very small enclosure.

As illustrated on the enclosed figures 3 to 6 the PTC heaters 314, 324, 334 and 344 are each provided between two metal electrodes 312, 316; 322, 326; 332, 336; 342, 346, such as aluminum or copper electrodes.

One of said electrodes 312, 322; 332 is directly in contact with the outside surface of the wall 161 of the pot 160. The electrode 342 is in contact with the outside surface of the bottom wall of the pot 160.

A resilient spring 318, 328, 338, is provided between the other electrode 316, 326 336 and the internal surface of the receiving pocket so as to exert a pressure upon the stacks of electrodes and PTC heaters.

The electrodes 312, 316; 322, 326; 332, 336 are generally in form of parallelepiped. The electrodes 342, 346 are generally circular. Preferentially as illustrated on the enclosed figures, electrodes 312, 316; 322, 326; 332, 336; 342, 346 have a cross section larger than the PTC heaters 314, 324, 334 and 344.

A cover may be fixed on a circular rib 113 integral with the lower surface of the lower wall 112, after electrical connection of the heating modules 300 so as to protect the heating device 300. Such a cover is not illustrated on the enclosed figures.

A spring similar to the springs 318, 328, 338 may be intercalated between PTC heater 344 and the cover.

Moreover as indicated above in accordance with the present invention the electrical connecting lines 400 for electrical supplying of the heating device 300 are fully provided on the outside of the tank 100.

Such connecting lines 400 extend from a connector 142 provided on the flange 140 and each one of the PTC modules 310, 320, 330 and 340.

Said connecting lines 400 being placed outside the tank 300, they are fully insulated from urea and consequently there is no risk of corrosion of said connecting lines 400 by the urea without needing any specific anti-corrosion sheathing.

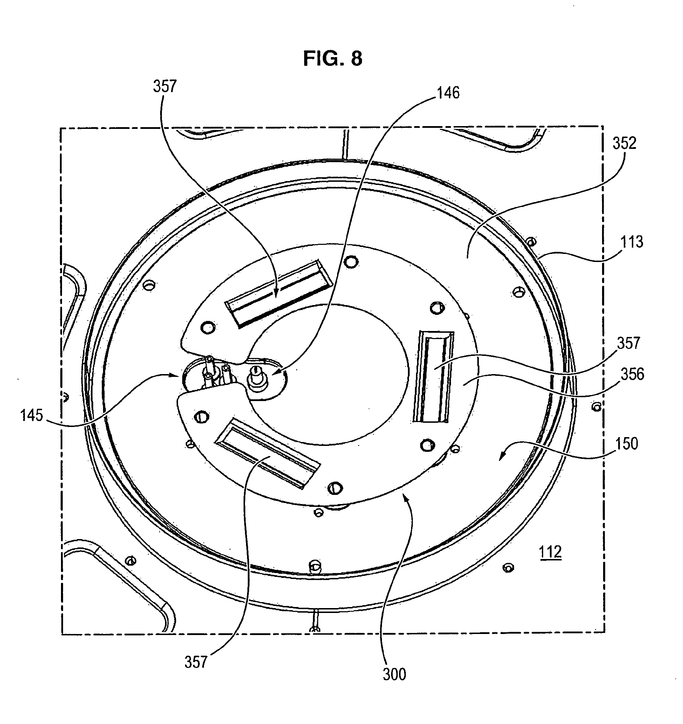

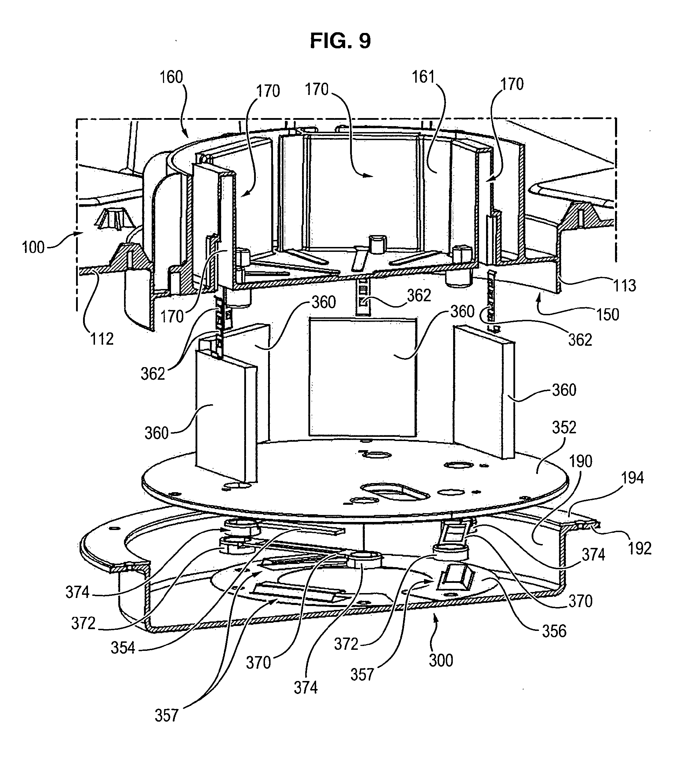

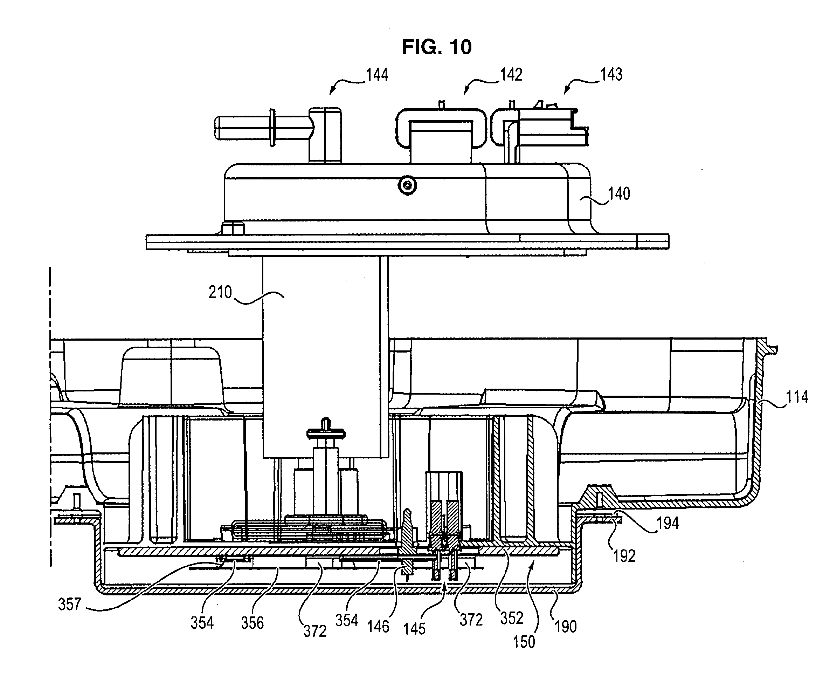

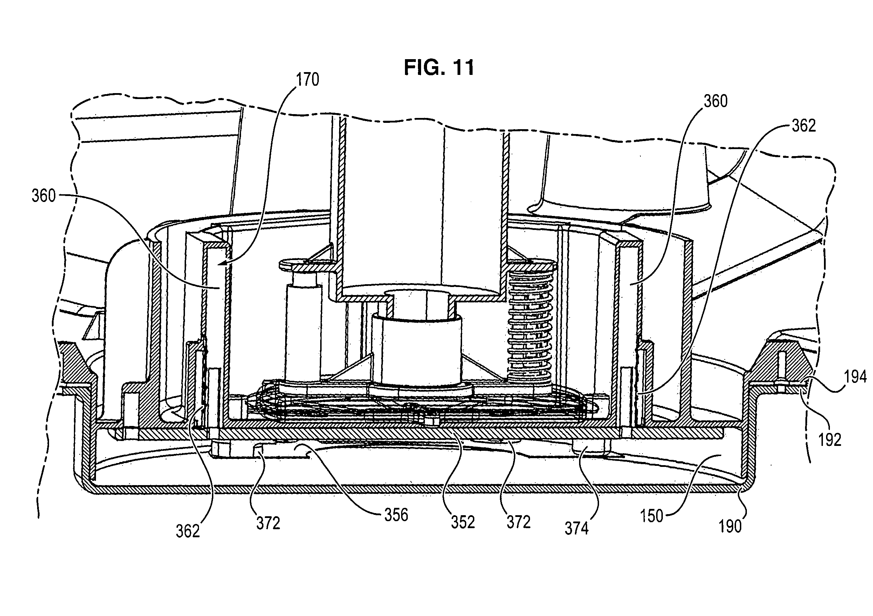

The second embodiment illustrated on figures 8 to 11 will be now described.

According to the second embodiment illustrated on figures 8 to 11, the heater device 300 is provided in a bottom chamber 150 formed on the external surface of the lower wall 112, as well as in a plurality of blind pockets 170 in communication with said chamber 150, provided around the wall 161 of the pot 160. The chamber 150 is preferentially inside a circular rib 113 integral with the lower surface of the lower wall 112 and a cover 190.

An annular seal 194 is provided between a collar 192 of the cover 190 and the lower wall 112 of the tank 100.

The heater device 300 comprises a plurality of PTC heaters 354, such as 3 PTC heaters 354, provided inside said chamber 150 between a bottom contact plate 356 and an heater plate 352.

The heater plate 352 is adjacent the lower wall 112. Preferentially the heater plate 352 has a circular form and is made from aluminum or copper.

The contact plate 356 is adjacent the cover 190. Preferentially the contact plate 356 is a ring including stamped parts 357 forming elastic means which urges the PTC heaters 354 and the heater plate 352 against the lower surface of the lower wall 112 so as to optimize the heat transfer from the heater plate 352 to the lower wall 112.

Contact plate 356 and parallel heater plate 352 are electrodes for electrical supplying of the PTC heaters 354 from the conductive lines 400.

Moreover the heater device illustrated on figures 8 to 11 includes heat sinks 360 linked with the heater plate 352 and inserted in the pockets 170 provided around the wall 161 of the pot 160.

Preferentially the heat sinks 360 are made from parallelepiped blocks connected by any means, such as screwing or welding, to the heater plate 352.

The heat sinks 360 extend vertically and transversely to the horizontal heater plate 352. The heat sinks 360 are dispatched in the pockets around the wall 161 of the pot 160 so as to cover as far as possible a majority of the surface of the wall 161.

The heat sinks 360 are urged against the outside surface of the wall 161 of the pot 160 by respective resilient springs 362 inserted in the pockets 170.

According to a specific and not limitative embodiment the heater device comprises 6 pockets 170 regularly dispatched around the wall 161 of the pot 160 and 6 heat sinks 360 with 6 springs 362 inserted respectively in one of said pockets 170.

According to the embodiment illustrated on figures 8 to 11, preferentially each PTC heater 354 is provided in a cradle 370 linked to two respective spacers 372, 374.

The spacers 372, 374 define the distance between the contact plate 356 and the heater plate 352. The cradle 370 is suitable to authorize a displacement of the PTC heaters 354 transversely to the contact plate 356 so as to warrant contact between said PTC heaters 354 and the heater plate 352.

The spacers 372, 374 are preferentially made from thermoplastic material so as to form an electric insulation between the contact plate 356 and the heater plate 352.

Preferentially the contact plate 356 is an open ring so as to clear a zone wherein are implemented a level sensor 145 and a temperature sensor 146.

The invention offers numerous advantages in regard of the state of the art :
- No metallic part, neither electrical wires for the heating device is inside the tank. Consequently the invention leads to a high level of robustness and to low risks of failure.
- Cost effective solution by using aluminum simple shapes instead of either stainless steel parts or overmolded aluminum heater.
- Easy assembly of heater components.
- Very good thermal conduction thanks to aluminum conductivity.
- PTC elements saturation is limited thanks to above point.
- Self thermally regulated heater thanks to PTC heating elements.
- No risk to alter urea quality.
- Optimization of the blind pockets using an injection molded tank enabling to obtain automatic optimized shapes for the insertion of heater components, without needing any kind of additional machining.

While the invention has been shown and describes by referring to a preferred embodiment thereof, it is to be understood that the invention is not limited to the specific form of this embodiment and that many changes and modifications may be made therein without departing from the scope of the invention.

## Claims

1. A system for storing an additive solution for a vehicle engine, said system comprising a tank (100) for storing said additive solution, a pumping module (200) for pumping said additive solution in the tank (100) and an electrical heating device (300) for heating the additive solution inside the tank (100) when freezing conditions are detected, said electrical heating device (300) being associated with electrical connecting lines (400) for electrical supply of the heating device (300), wherein the heating device (300) comprises at least an heating module (310, 320, 330, 340) provided in a blind pocket (170, 172, 174) integral with the lower wall (112) of the tank, said pocket (170, 172, 174) opening outside the tank (100) and projecting inside the internal volume of the tank (100) from the lower wall (112) and said electrical connecting lines (400) for electrical supplying of the heating device (300) being fully provided on the outside of the tank (100).

2. System according to claim 1, wherein the device comprises a plurality of heating modules (310, 320, 330, 340) each including a PTC heater (314, 324, 334, 344).

3. System according to one of claims 1 or 2, wherein the device comprises a reserve pot (160), the pumping module (200) is provided inside the reserve pot (160) and the heating modules (310, 320, 330, 340) cover the wall (161) of the reserve pot (160).

4. System according to one of claims 1 to 3, wherein the device comprises a reserve pot (160) having a generally circular wall (161) vertical on the lower wall (112) of the tank (100), the pumping module (200) being provided inside the reserve pot (160), a plurality of heating modules (310, 320, 330) covering the circular wall (161) of the reserve pot (160) and an additional heating module (340) provided on the lower wall of the reserve pot (160).

5. System according to one of claims 1 to 4, wherein the heater device (300) is provided in a bottom chamber (150) formed on the external surface of the lower wall (112) of the tank, as well as in a plurality of blind pockets (170) in communication with said chamber (150), provided around the wall (161) of a reserve pot (160), the heater device (300) comprising a plurality of PTC heaters (354) provided inside said chamber (150) between a bottom contact plate (356) and an heater plate (352) and heat sinks (360) linked with the heater plate (352) and inserted in the pockets (170) provided around the wall (161) of the pot (160).

6. System according to claim 5, wherein the heater plate (352) is adjacent the lower wall (112) of the tank.

7. System according to one of claims 5 or 6, wherein the contact plate (356) is provided with stamped parts (357) forming elastic means which urges the PTC heaters (354) and the heater plate (352) against the lower surface of the lower wall (112) of the tank.

8. System according to one of claims 5 to 7, wherein the heat sinks (360) are urged against the outside surface of the wall (161) of the pot (160) by respective resilient springs (362) inserted in the pockets (170).

9. System according to one of claims 5 to 8, wherein each PTC heater (354) is provided in a cradle (370).

10. System according to one of claims 5 to 9, wherein spacers (372, 374)are provided between the contact plate (356) and the heater plate (352).

11. System according to one of claims 1 to 10, wherein each heating module comprises a PTC heater (314, 324, 334, 344) provided between two metal electrodes (312, 316; 322, 326; 332, 336; 342, 346).

12. System according to claims 11, wherein the metal electrodes (312, 316; 322, 326; 332, 336; 342, 346) are made in aluminum or copper.

13. System according to one of claims 1 to12, wherein each heating module (310, 320, 330) comprises a resilient spring (318, 328, 338) provided between an electrode (316, 326 336) and the internal surface of a receiving pocket (170, 172, 174) so as to exert a pressure upon a stack of electrodes (312, 316; 322, 326; 332, 336; 342, 346) and a heater (314, 324, 334, 344).

14. System according to one of claims 1 to 13, wherein said electrical connecting lines (400) for electrical supplying of the heating device (300) extend from a connector (142) provided on a flange (140) supported on the upper wall (110) of the tank and each heating module (310, 320, 330 and 340).

15. System according to one of claims 1 to 14, wherein the device comprises a reserve pot (160) and each blind pocket (170, 172, 174) is integral with a vertical wall (161) of the pot (160).

## Amended claims

### Amended claims in accordance with Rule 137(2) EPC.

**1.** A system for storing an additive solution for a vehicle engine, said system comprising a tank (100) for storing said additive solution, a pumping module (200) for pumping said additive solution in the tank (100) and an electrical heating device (300) for heating the additive solution inside the tank (100) when freezing conditions are detected, said electrical heating device (300) being associated with electrical connecting lines (400) for electrical supply of the heating device (300), wherein the heating device (300) comprises at least an heating module (310, 320, 330, 340) provided in a blind pocket (170, 172, 174) integral with the lower wall (112) of the tank, said pocket (170, 172, 174) opening outside the tank (100) and projecting inside the internal volume of the tank (100) from the lower wall (112) and said electrical connecting lines (400) for electrical supplying of the heating device (300) being fully provided on the outside of the tank (100),
the system being **characterized in that** the device comprises a reserve pot (160), having a generally circular wall (161) vertical on the lower wall (112) of the tank (100), a plurality of heating modules (310, 320, 330) covering the circular wall (161) of the reserve pot (160) and an additional heating module (340) provided on the lower wall of the reserve pot (160).

**2.** System according to claim 1, wherein the device comprises a plurality of heating modules (310, 320, 330, 340) each including a PTC heater (314, 324, 334, 344).

**3.** System according to one of claims 1 or 2, wherein the pumping module (200) is provided inside the reserve pot (160).

**4.** System according to one of claims 1 to 3, wherein the heater device (300) is provided in a bottom chamber (150) formed on the external surface of the lower wall (112) of the tank, as well as in a plurality of blind pockets (170) in communication with said chamber (150), provided around the wall (161) of a reserve pot (160), the heater device (300) comprising a plurality of PTC heaters (354) provided inside said chamber (150) between a bottom contact plate (356) and an heater plate (352) and heat sinks (360) linked with the heater plate (352) and inserted in the pockets (170) provided around the wall (161) of the pot (160).

**5.** System according to claim 4, wherein the heater plate (352) is adjacent the lower wall (112) of the tank.

**6.** System according to one of claims 4 or 5, wherein the contact plate (356) is provided with stamped parts (357) forming elastic means which urges the PTC heaters (354) and the heater plate (352) against the lower surface of the lower wall (112) of the tank.

**7.** System according to one of claims 4 to 6, wherein the heat sinks (360) are urged against the outside surface of the wall (161) of the pot (160) by respective resilient springs (362) inserted in the pockets (170).

**8.** System according to one of claims 4 to 7, wherein each PTC heater (354) is provided in a cradle (370).

**9.** System according to one of claims 4 to 8, wherein spacers (372, 374)are provided between the contact plate (356) and the heater plate (352).

**10.** System according to one of claims 1 to 9, wherein each heating module comprises a PTC heater (314, 324, 334, 344) provided between two metal electrodes (312, 316; 322, 326; 332, 336; 342, 346).

**11.** System according to claim 10, wherein the metal electrodes (312, 316; 322, 326; 332, 336; 342, 346) are made in aluminum or copper.

**12.** System according to one of claims 1 to 11, wherein each heating module (310, 320, 330) comprises a resilient spring (318, 328, 338) provided between an electrode (316, 326 336) and the internal surface of a receiving pocket (170, 172, 174) so as to exert a pressure upon a stack of electrodes (312, 316; 322, 326; 332, 336; 342, 346) and a heater (314, 324, 334, 344).

**13.** System according to one of claims 1 to 12, wherein said electrical connecting lines (400) for electrical supplying of the heating device (300) extend from a connector (142) provided on a flange (140) supported on the upper wall (110) of the tank and each heating module (310, 320, 330 and 340).

**14.** System according to one of claims 1 to 13, wherein the device comprises a reserve pot (160) and each blind pocket (170, 172, 174) is integral with a vertical wall (161) of the pot (160).
